# FASCICULE DE BREVET EUROPEEN

(11) **EP 0 451 011 B1**
(45) Date de publication et mention de la délivrance du brevet: **17.05.1995**
(21) Numéro de dépôt: 91400791.9
(22) Date de dépôt: 22.03.1991
(51) Int. Cl.: F16J 1/22, F16C 11/06, F16N 13/18

(54) **Piston pour moteurs à combustion interne et machines analogues**
Kolben für Brennkraftmaschinen
Piston for internal-combustion engines

(30) Priorité: 06.04.1990 FR 9004477
(43) Date de publication de la demande: 09.10.1991
(73) Titulaire: Melchior, Jean Frédéric, F-75014 Paris (FR)
(72) Inventeur: Melchior, Jean Frédéric, F-75014 Paris (FR)
(74) Mandataire: Bernasconi, Jean

(56) Documents cités:
- EP-A- 0 280 622
- FR-A- 745 863
- FR-E- 44 196
- US-A- 2 317 004

## Description

### Piston pour moteurs à combustion interne et machines analogues.

L'invention est relative aux pistons, destinés à coulisser dans les cylindres de moteurs alternatifs à combustion interne ou externe et de compresseurs, c'est-à-dire de machines où un gaz de travail, contenu dans le ou chaque cylindre par une surface transversale du piston, est à la fois à haute pression et à haute température, et elle concerne de préférence, mais non exclusivement, les pistons pour moteurs alternatifs à combustion interne, à deux temps ou à quatre temps.

On connaît depuis longtemps, par exemple par FR-A- 745 863 et son addition FR-E- 44 196, des articulations à rotule entre une bielle et un piston de moteur à combustion interne. Dans ces solutions anciennes, la rotule sphérique portée par l'extrémité de la bielle est reçue dans un boîtier rigide en deux parties, formant la portée sphérique de la rotule et logé dans le piston avec une lubrification permanente de la rotule à travers un passage d'huile dans la bielle.

L'invention est plus particulièrement relative à ceux de ces pistons qui possèdent, à l'intérieur d'un corps extérieurement cylindrique, une cavité intérieure où sont logés le pied partiellement sphérique d'une bielle et une coquille étanche qui comprend une calotte sensiblement hémisphérique et dont le bord est rendu annulairement solidaire de la partie inférieure du corps du piston, laquelle coquille est agencée de façon que sa calotte sensiblement hémisphérique ne porte, lorsque le piston est au repos ou lorsque la pression du gaz de travail est minimale au cours du cycle de compression-détente, sur le pied partiellement sphérique de la bielle que le long d'une ligne ou d'une bande de contact, fermée circulaire, située dans, ou limitée à sa partie supérieure par, un plan passant au-dessus du centre du pied de bielle et de préférence perpendiculaire à l'axe du piston, lequel piston comprend des moyens unidirectionnels d'arrivée d'huile de lubrification sous pression qui communiquent en amont, par l'intermédiaire d'un clapet anti-retour, avec un passage d'huile aménagé dans la bielle et qui débouchent, de préférence dans l'axe de la bielle, dans un interstice délimité par les parties de la surface du pied de bielle et de la coquille situées au-dessus de la susdite ligne ou bande de contact, la pression de l'huile de lubrification, en amont du susdit clapet anti-retour, étant supérieure, au moins pendant une partie du cycle de compression-détente du gaz de travail, à la pression régnant dans ledit interstice, l'espace situé entre le pied de bielle et la coquille, au-dessous de leur susdite ligne ou bande de contact, communiquant avec une zone de décharge à pression relativement basse, inférieure à la pression maximale régnant dans le susdit interstice.

Dans ce contexte, lorsque sont utilisées des expressions de position telles que "supérieure", "inférieure", "au-dessus" ou "au-dessous", il est supposé que le piston est orienté de façon que son axe soit vertical et que la bielle se place au-dessous de ce piston. Cette hypothèse n'est destinée qu'à simplifier la description et n'implique donc pas que le piston soit effectivement orienté ainsi lorsqu'il est monté dans un moteur à combustion interne ou externe ou dans un compresseur.

Un piston tel qu'il a été défini ci-dessus est décrit dans le document EP-A-0 280 622, en regard de ses figures 8 et 11. Selon cette construction connue, la coquille est une coquille métallique mince, de préférence en bronze, qui est agencée de façon que sa calotte ne travaille pratiquement qu'en compression perpendiculairement à sa surface et dont la seule fonction est de contribuer à l'étanchéité de l'espace qui est limité à l'intérieur de la susdite cavité par celle des surfaces de la calotte de la coquille qui est éloignée du pied de bielle, lequel espace est rempli d'un tampon de fluide visqueux ou pâteux ou plastiquement déformable et pratiquement incompressible aux températures et pressions de fonctionnement du piston. A cet effet, la coquille possède une partie cylindrique qui est mobile axialement au contact d'une portée cylindrique intérieure du piston et il existe donc au repos, entre le bord de la coquille qui est fixé à la paroi intérieure du piston et le reste de la coquille, un jeu qui permet à la coquille de se déformer à proximité de ce bord sans y être soumise à des efforts de traction. Les efforts exercés en fonctionnement par le gaz de travail sur la surface transversale du piston sont en effet transmis au pied partiellement sphérique de la bielle par le susdit tampon de fluide, sans intervention de la coquille.

A côté d'avantages indéniables, ce piston connu présente les inconvénients suivants :
- difficultés de montage, dues notamment au fait que le tampon de fluide a généralement un coefficient de dilatation thermique différent de celui des pièces métalliques en présence, ce qui rend difficile un dosage adéquat du volume du fluide;
- du fait de la viscosité du fluide, retard, en régime transitoire, de la transmission de l'effort de pression qui est variable en amplitude (variation de la pression exercée par le gaz de travail) et en direction (angulation de la bielle), ce qui risque de provoquer, dans la distribution hydrostatique de la pression sur la coquille, des défauts d'homogénéité, qui peuvent créer sur celle-ci des efforts de cisaillement, entraînant la fatigue et la rupture de la coquille.

L'invention a pour but de remédier à ces inconvénients, en faisant travailler la coquille d'une façon nouvelle et originale.

A cet effet, le piston conforme à l'invention est essentiellement caractérisé en ce que l'espace qui est limité à l'intérieur de la susdite cavité par celle des surfaces de la coquille qui est éloignée du pied de bielle est agencé de façon telle qu'il ne puisse s'y développer, en cours de fonctionnement, une pression hydrostatique appréciable du fait de la déformation de la coquille; en ce que la coquille est maintenue tendue en fonctionnement entre le pied partiellement sphérique de la bielle et la zone annulaire par laquelle son bord est rendu solidaire de la partie inférieure du corps du piston; et en ce que la coquille est faite en un métal ou autre matériau élastique équivalent, et a une épaisseur suffisamment grande pour que cette coquille soit capable de transmettre au pied partiellement sphérique de la bielle les efforts exercés en fonctionnement par le gaz de travail sur la susdite surface transversale du piston et reçus par la coquille par l'intermédiaire de sa zone annulaire de solidarisation, l'épaisseur de la coquille étant toutefois suffisamment petite pour qu'elle puisse se déformer élastiquement sous l'effet de la tension résultant des efforts dus à la pression du gaz de travail s'exerçant cycliquement sur la surface transversale du piston et transmis à la bielle par l'intermédiaire de ladite coquille, de façon à réduire cycliquement le volume du susdit interstice et de préférence à augmenter cycliquement la surface de la bande de contact, les limites minimale et maximale imposées à l'épaisseur de la coquille étant telles que le matériau dont celle-ci est faite ne doive en aucune circonstance dépasser sa limite de fatigue.

On fait ainsi jouer à la coquille non plus un simple rôle d'étanchéité, comme dans le piston conforme au document EP-A-0 280 622, mais un rôle de transmission d'efforts, et ceci en la faisant travailler essentiellement non plus en compression, mais en traction, avec suppression du matelas de fluide qui constitue un élément essentiel du piston conforme au susdit document.

Telles qu'elles sont définies ci-dessus, les limites entre lesquelles doit être choisie l'épaisseur de la coquille permettent à un homme de métier de déterminer cette épaisseur en fonction de la nature de la matière qui constitue la coquille. La limite inférieure permet à la coquille de jouer le rôle de la membrane d'une pompe qui permet d'entretenir en fonctionnement, entre le pied de la bielle et la coquille, une pellicule d'huile empêchant tout contact direct entre ces deux éléments qui doivent osciller l'un par rapport à l'autre au cours de chaque cycle. Au repos, il subsiste un interstice rempli d'huile, ce qui permet le réamorçage de cette pompe dès le lancement du moteur.

L'invention va être maintenant décrite plus en détail à l'aide des dessins annexés.

La figure 1 de ces dessins représente schématiquement, en coupe axiale, l'ensemble d'un piston conforme à l'invention et de la bielle correspondante.

La figure 2 montre la coquille et le pied de bielle de la figure 1 et illustre la façon dont l'huile de lubrification est mise en circulation.

Les figures 3 et 4 représentent des variantes de la figure 2.

Les figures 5 à 7 enfin illustrent diverses solutions pour empêcher l'ensemble du piston et du pied de bielle de fonctionner comme un vérin hydraulique.

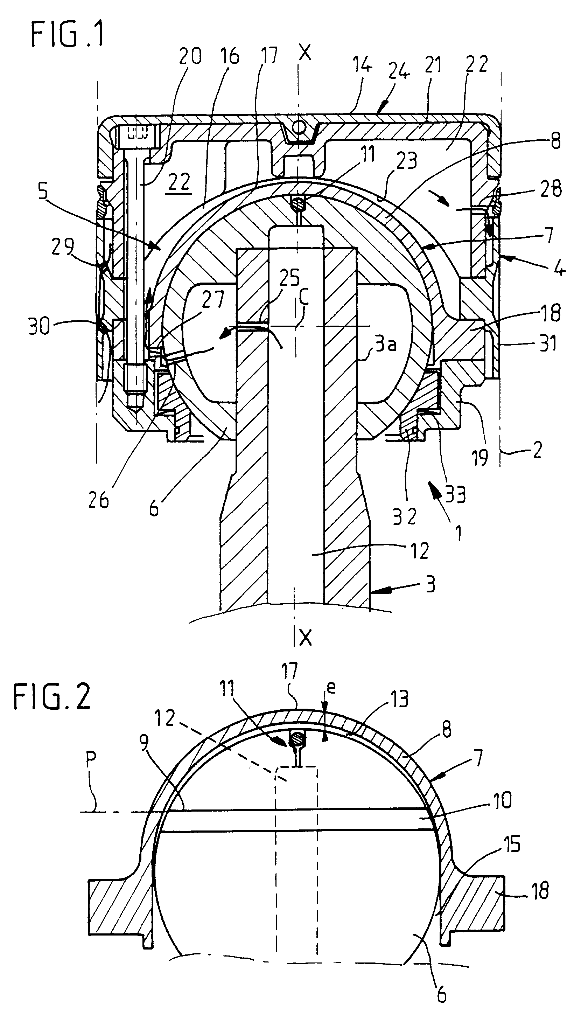

Comme le montre schématiquement la figure 1, l'invention a pour objet un piston 1 destiné à coulisser dans un cylindre 2 et attelé à une bielle 3. A l'intérieur d'un corps 4 extérieurement cylindrique d'axe X-X (le terme "cylindrique" n'excluant bien entendu pas la présence de gorges pour segments ou analogues non plus qu'un certain bombement du corps), le corps 4 possède une cavité intérieure 5 où sont logés le pied partiellement sphérique 6 de la bielle 3 et une coquille 7 qui est étanche, c'est-à-dire non ajourée, non perméable. Cette coquille 7 comprend une calotte sensiblement hémisphérique 8 et son bord est rendu annulairement solidaire de la partie inférieure du corps 4 du piston 1, d'une manière qui sera détaillée ci-après. De préférence, le pied 6 est emmanché à force sur l'extrémité cylindrique 3a de la bielle 3.

La coquille 7 est agencée de façon que sa calotte 8 ne porte sur le pied partiellement sphérique 6, lorsque le piston 1 est au repos ou que la pression du gaz de travail est minimale au cours du cycle de compression-détente, que le long d'une ligne de contact 9 (figure 2) fermée circulaire située dans un plan P passant au-dessus du centre C du pied 6 ou d'une bande de contact 10 fermée circulaire limitée à sa partie supérieure par ce plan P. Le plan P est de préférence perpendiculaire à l'axe X-X. En fonctionnement, il s'établit dans tous les cas une bande de contact 10 dont la surface varie cycliquement.

Le piston 1 comprend des moyens unidirectionnels d'arrivée d'huile de lubrification sous pression qui communiquent en amont, par l'intermédiaire d'un clapet anti-retour 11, avec un passage d'huile 12 aménagé dans la bielle 3 et traversant son pied 6 et qui débouchent, de préférence dans l'axe de la bielle 3, dans un interstice ou ménisque 13 délimité par les parties du pied 6 et de la coquille 7 situées au-dessus de la ligne 9 ou bande 10 de contact. Au moins pendant une partie du cycle de compression-détente du gaz de travail qui agit à l'intérieur du cylindre 2 sur la surface transversale 14 du piston 1 éloignée de la bielle 3, la pression de l'huile de lubrification, en amont du clapet anti-retour 11, est supérieure à la pression régnant dans l'interstice 13. L'espace 15 situé entre le pied de bielle 6 et la coquille 7, au-dessous de la ligne 9 ou bande 10 de contact, communique avec une zone de décharge à pression relativement basse, inférieure à la pression régnant dans l'interstice 13.

Conformément à l'invention,
- l'espace 16 qui est limité à l'intérieur de la cavité 5 par celle des surfaces de la coquille 7 qui est éloignée du pied de bielle 6, c'est-à-dire par la surface supérieure 17 de la coquille 7, est agencé de façon telle qu'il ne puisse s'y développer, en cours de fonctionnement, une pression hydrostatique appréciable du fait de la déformation de la coquille 7;
- la coquille 7 est maintenue tendue en fonctionnement entre le pied 6 et la zone annulaire par laquelle le bord de cette coquille 7 est rendu solidaire de la paroi intérieure du corps 4; et

la coquille 7 est faite en un métal ou autre matériau élastique, notamment en acier, et a une épaisseur e suffisamment grande pour que cette coquille 7 soit capable de transmettre au pied 6 les efforts exercés en fonctionnement par le gaz de travail sur la surface transversale 14 et reçus par la coquille 7 par l'intermédiaire de sa zone annulaire de solidarisation. L'épaisseur e de la coquille 7 est toutefois suffisamment petite (tout au moins dans la partie de sa calotte 8 qui est limitée par la ligne 9 ou bande 10 de contact) pour qu'elle puisse se déformer élastiquement sous l'effet de la tension résultant des efforts dus à la pression du gaz de travail s'exerçant cycliquement sur la surface transversale 14 et transmis à la bielle 3 par l'intermédiaire de la coquille 7. Au lieu d'être en métal, notamment en acier, la coquille 7 pourrait être faite d'un matériau équivalent tel qu'une matière plastique éventuellement armée de fibres.

La coquille 7 de l'invention se distingue donc de la coquille conforme au susdit document EP-A-0 280 622 par la nature de son matériau constitutif (métal ou autre matériau élastique tel qu'acier, au lieu de bronze); par son épaisseur (qui est suffisamment grande pour résister aux efforts de traction développés en fonctionnement alors que la coquille connue est mince puisqu'elle n'a pas à subir de tels efforts); et par le fait qu'elle est maintenue tendue en fonctionnement (alors que la coquille connue est libre de se déplacer au contact de la surface intérieure cylindrique du corps du piston). Les limites minimale et maximale imposées à l'épaisseur de la coquille 7 sont de toute façon telles que le matériau dont cette coquille est faite ne doive en aucune circonstance dépasser sa limite de fatigue et même disposer d'une certaine marge de sécurité.

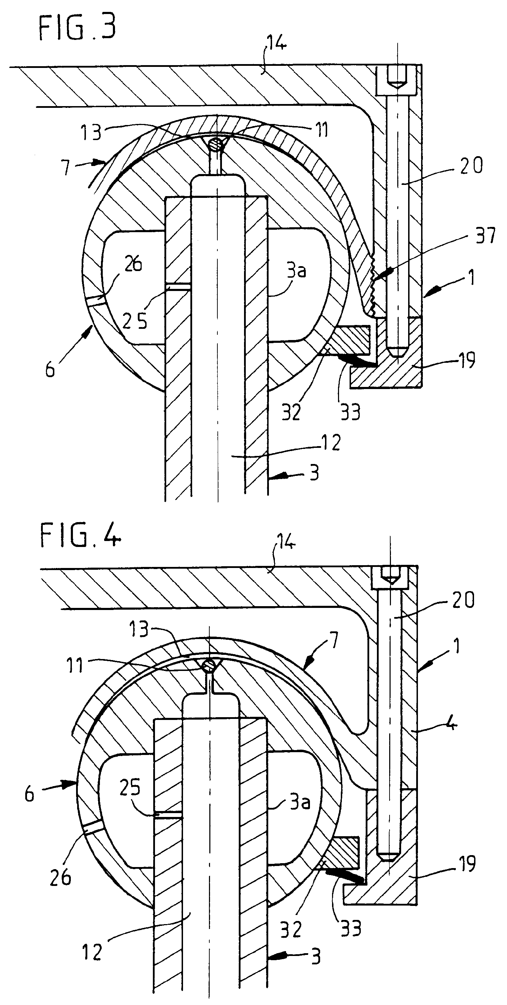

Bien qu'il soit possible de fixer le bord de la coquille 7 à la partie inférieure du corps de piston 4 en pinçant une collerette 18 constituant le bord de la coquille 7 et faisant saillie radialement vers l'extérieur, entre le corps de piston 4 et une bride 19 fixée rigidement au corps 4, à l'aide de vis d'assemblage 20 parallèles à l'axe X-X, il sera préférable de rendre la coquille 7 solidaire du corps 4, soit par soudure du bord de la coquille avec la partie inférieure et intérieure du corps 4, comme indiqué en 37 à la figure 3, soit en réalisant le corps 4 et la coquille 7 en une seule pièce, de préférence par fonderie de précision, comme représenté schématiquement à la figure 4.

Pour qu'il ne puisse se développer dans l'espace 16 défini ci-dessus une pression hydrostatique appréciable, cet espace 16 peut être un espace clos rempli d'un gaz tel que de l'air, notamment à une pression voisine de la pression atmosphérique. En variante et comme représenté à la figure 1, l'espace 16 peut être rempli, au moins en partie, par de l'huile de lubrification et être relié à une zone de décharge à pression relativement basse, par exemple à la même zone de décharge que celle qui est associée à l'espace 15. Un mode de réalisation du circuit d'huile alimentant l'espace 16 sera décrit plus en détail ci-après.

Selon le mode de réalisation représenté à la figure 1, la cavité intérieure 5 du corps de piston 4 est limitée à sa partie supérieure par une paroi transversale 21 à laquelle sont attenantes des cloisons de raidissement rayonnantes 22 qui laissent libres entre elles des compartiments faisant partie de l'espace 16 et dont les bords inférieurs arqués 23 sont suffisamment éloignés de la surface 17 de la coquille 7 pour ne pas gêner les déformations de celle-ci. Sur la paroi transversale 21, il est de préférence rapporté une calotte réfractaire 24 qui est avantageusement munie d'évidements (non représentés sur la fig. 1) réduisant sa surface de contact avec la paroi 21 et formant ainsi barrière thermique et qui constitue la susdite surface transversale 14, de façon à protéger la paroi transversale 21 et les têtes des vis 20.

Le passage 12 alimente en huile non seulement l'interstice 13 par l'intermédiaire du clapet anti-retour 11, mais encore un circuit de refroidissement de l'interface piston/cylindre (ou chemise de ce cylindre) par l'intermédiaire d'un orifice 25 placé en amont du clapet anti-retour 11, traversant l'extrémité 3a de la bielle 3 et relié à l'espace 16 par des orifices 26 et 27 traversant respectivement le pied de bielle 6 et la coquille 7. De l'espace 16, l'huile peut s'échapper par des orifices 28, 29 et 30 ménagés dans le corps 4 ou dans une jupe rapportée 31, vers le carter du moteur où règne la pression atmosphérique.

Pour établir l'interstice 13, on pourrait donner à la calotte 8 de la coquille 7 une forme partiellement sphérique au repos et à la partie du pied 6 qui est coiffée par cette calotte 8 une forme légèrement aplatie par rapport à une sphère. Néanmoins, en vue de centrer les efforts dans l'axe X-X du piston 1 quelle que soit l'orientation de la bielle 3 et de limiter les déformations de la calotte 8, il est préférable de donner au pied 6 une forme aussi parfaitement sphérique que possible et à la calotte 8 une forme s'écartant légèrement au repos de la forme parfaitement sphérique, ainsi qu'il ressort de la figure 2.

Pour maintenir la cohésion de l'ensemble bielle-piston, la bride 19 peut également pincer une entretoise 32 à travers des moyens élastiques tels qu'une rondelle en acier 33, venant s'appuyer sur la partie inférieure du pied 6. On peut ainsi donner à la coquille 7, notamment pour des pistons destinés à des moteurs à quatre temps, une pré-tension réglable par la hauteur de l'entretoise 32, laquelle peut en outre empêcher l'huile présente entre le pied 6 et la coquille 7 de s'échapper directement vers le bas, en court-circuitant ainsi le circuit de refroidissement passant par les orifices 27 à 30. Dans les modes de réalisation des figures 3 et 4, on retrouve une bride 19, rendue solidaire du corps 4 par des vis 20 qui coopèrent avec une entretoise 32 et une rondelle élastique 33 ; la seule différence avec le mode de réalisation des figures 1 et 2 est que la bride 19 ne sert pas ici à pincer une collerette telle que 18.

On obtient ainsi un piston dont le fonctionnement est le suivant.

Lorsque le piston 1 est au repos, c'est-à-dire lorsqu'il ne s'exerce pas de pression gazeuse sur sa surface transversale 14, la coquille métallique épaisse 7 est détendue (sous réserve de la pré-tension exercée éventuellement par les moyens élastiques 33). Le piston 1 s'appuie sur le pied 6 par l'intermédiaire de la coquille 7 le long de la ligne 9 ou bande 10 de contact. L'interstice ou ménisque 13 est rempli d'huile.

Lorsque la pression du gaz de travail s'exerce sur la surface transversale 14 du piston 1, le corps de piston 4, en s'appuyant sur la collerette 18 de la coquille 7, transmet l'intégralité de la force due à l'action du gaz de travail (diminuée de la force d'inertie du piston) au pied 6 de la bielle 3 par l'intermédiaire de la calotte ou voûte 8 de la coquille 7 qui travaille ainsi essentiellement en traction. L'application de cette force dirigée vers le bas provoque :
- l'allongement de la coquille 7 qui se tend à la manière d'une sangle;
- l'augmentation de la surface d'appui de la coquille 7 sur le pied 6 et la réduction du volume du ménisque 13;
- l'augmentation de la pression d'huile dans le ménisque 13, ce qui ferme le clapet anti-retour 11 en bloquant le retour d'huile;
- et par conséquent l'expulsion de l'huile qui était emprisonnée entre le pied 6 et la surface intérieure (opposée à la susdite surface 17) de la calotte 8 de la coquille 7.

On notera que, par ce mécanisme, la surface d'appui entre le pied 6 et la coquille 7 sera automatiquement lubrifiée par de l'huile fraîche renouvelée à chaque cycle. En effet, lorsque la pression du gaz de travail se relâche, la coquille 7 se détend et le ménisque 13 se reforme en provoquant la réaspiration d'huile à travers le clapet anti-retour 11.

Dans ce qui précède, il a été dit que l'espace situé entre le pied de bielle 6 et la coquille 7, au-dessous de la ligne ou bande de contact 9, 10, communiquait avec une zone de décharge à pression relativement basse. Ceci signifie que la coquille 7 et/ou le pied de bielle 6 doivent être agencés de façon telle que l'ensemble piston 1/pied 6 ne puisse constituer un vérin ou "cliquet" hydraulique.

En effet, si la collerette 18 présentait par exemple une partie intérieure cylindrique au même diamètre (sans jeu) que celui du pied 6, la pression s'établissant dans le ménisque 13 monterait sans que l'huile puisse s'échapper (puisque, dans cette hypothèse, le jeu est nul). L'articulation fonctionnerait alors comme un vérin hydraulique et le corps de piston 4 s'écarterait progressivement du pied 6. Si l'entretoise 32 était en place, elle s'opposerait à cette séparation axiale du pied 6 et du corps 4 en provoquant des surcharges mécaniques très élevées.

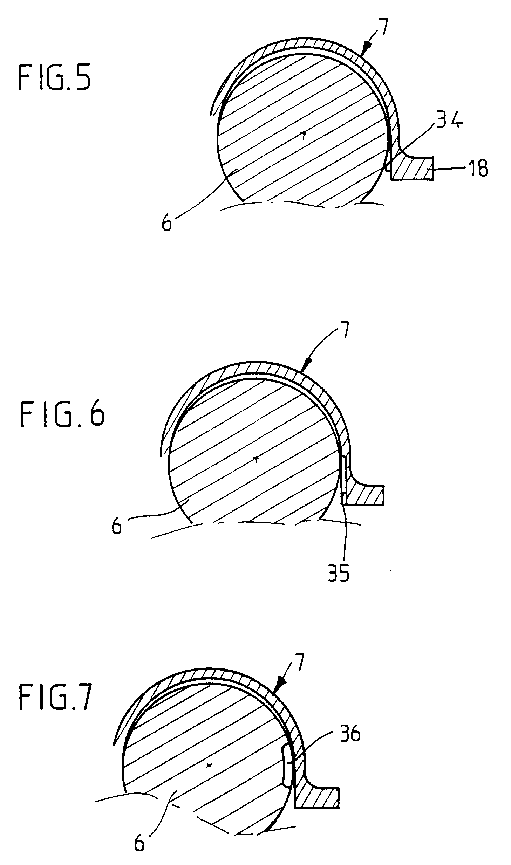

Pour éliminer ce phénomène, trois solutions sont illustrées schématiquement à titre d'exemples aux figures 5 à 7. Selon la figure 5, on donne à la coquille 7, au niveau de la collerette 18, une surface intérieure tronconique 34, épanouie vers le bas, ou bien on établit des dégagements par des rainures 35 dans la coquille 7 (figure 6) et/ou par des rainures 36 dans le pied 6 (figure 7).

A titre d'exemple, il a été construit un piston 1 présentant les caractéristiques suivantes :
- diamètre du piston 1 : 135 mm ;
- diamètre du pied 6 : 90 mm ;
- épaisseur de la calotte 8 en acier : 4 mm ;
- hauteur maximale du ménisque 13 : 0, 1 mm ;
- volume maximal du ménisque 13 : 125 mm³.

Une pression de 30 MPa sur un tel piston pesant 5 kg et soumis à une accélération de 300 g exerce une force de 41.470 daN et donc une contrainte de traction de 370 MPa sur la coquille. Si le volume du ménisque 13 est annulé par cette contrainte de traction, le débit d'huile pour un moteur à 3 cylindres tournant à 1 800 tours/minute sera de 40 l/heure environ.

## Revendications

1. Piston destiné à coulisser dans les cylindres de moteurs alternatifs à combustion interne ou externe et de compresseurs, c'est-à-dire de machines où un gaz de travail, contenu dans le ou chaque cylindre (3) par une surface transversale (14) du piston (1), est à la fois à haute pression et à haute température, de préférence piston pour moteurs alternatifs à combustion interne, à deux temps ou à quatre temps, possédant, à l'intérieur d'un corps extérieurement cylindrique (4), une cavité intérieure (5) où sont logés le pied partiellement sphérique (6) d'une bielle (3) et une coquille étanche (7) qui comprend une calotte sensiblement hémisphérique (8) et dont le bord est rendu annulairement solidaire de la partie inférieure du corps (4) du piston (1), laquelle coquille (7) est agencée de façon que sa calotte (8) sensiblement hémisphérique ne porte, lorsque le piston (1) est au repos ou lorsque la pression est minimale au cours du cycle de compression-détente, sur le pied partiellement sphérique (6) de la bielle (3) que le long d'une ligne ou bande de contact fermée circulaire (9, 10) située dans, ou limitée à sa partie supérieure par, un plan (P) passant au-dessus du centre (C) du pied de bielle (6) et de préférence perpendiculaire à l'axe (X-X) du piston (1), lequel piston (1) comprend des moyens unidirectionnels d'arrivée d'huile de lubrification sous pression qui communiquent en amont, par l'intermédiaire d'un clapet anti-retour (11), avec un passage d'huile (12) aménagé dans la bielle (3) et qui débouchent, de préférence dans l'axe de la bielle, dans un interstice (13) délimité par les parties de la surface du pied de bielle (6) et de la coquille (7) situées au-dessus de la susdite ligne ou bande de contact (9, 10), la pression de l'huile de lubrification, en amont du susdit clapet anti-retour (11), étant supérieure, au moins pendant une partie du cycle de compression-détente du gaz de travail, à la pression régnant dans ledit interstice (13), l'espace situé entre le pied de bielle (6) et la coquille (7), au-dessous de leur susdite ligne ou bande de contact (9, 10), communiquant avec une zone de décharge à pression relativement basse, inférieure à la pression maximale régnant dans le susdit interstice (13),
caractérisé en ce que l'espace (16) qui est limité à l'intérieur de la susdite cavité (5) par celle (17) des surfaces de la coquille (7) qui est éloignée du pied de bielle (6) est agencé de façon telle qu'il ne puisse s'y développer, en cours de fonctionnement, une pression hydrostatique appréciable du fait de la déformation de la coquille (7); en ce que la coquille (7) est maintenue tendue en fonctionnement entre le pied partiellement sphérique (6) de la bielle (3) et la zone annulaire par laquelle son bord est rendu solidaire de la partie inférieure du corps (4) du piston (1); et en ce que la coquille (7) est faite en un métal ou autre matériau élastique équivalent, et a une épaisseur suffisamment grande pour que cette coquille (7) soit capable de transmettre au pied partiellement sphérique (6) de la bielle (3) les efforts exercés en fonctionnement par le gaz de travail sur la susdite surface transversale (14) du piston (1) et reçus par la coquille (7) par l'intermédiaire de sa zone annulaire de solidarisation, l'épaisseur de cette coquille (7) étant toutefois suffisamment petite pour qu'elle puisse se déformer élastiquement sous l'effet de la tension résultant des efforts dus à la pression du gaz de travail s'exerçant cycliquement sur la surface transversale (14) du piston (1) et transmis à la bielle (3) par l'intermédiaire de la coquille (7), de façon à réduire cycliquement le volume de l'interstice (13) et de préférence à augmenter cycliquement la surface de la bande de contact (10) ; les limites minimale et maximale imposées à l'épaisseur de la coquille (7) étant telles que le matériau dont elle est faite ne doive en aucune circonstance dépasser sa limite de fatigue.

2. Piston selon la revendication 1, caractérisé en ce que l'espace (16) limité à l'intérieur de la susdite cavité (5) est clos et rempli d'un gaz.

3. Piston selon la revendication 1, caractérisé en ce que l'espace (16) limité à l'intérieur de la susdite cavité (5) est rempli, au moins en partie, par de l'huile de lubrification et est relié à une zone de décharge à pression relativement basse.

4. Piston selon la revendication 3, caractérisé en ce que l'espace (16) est alimenté en huile prélevée sur les moyens unidirectionnels d'arrivée d'huile (11, 12), en amont de leur clapet anti-retour (11).

5. Piston selon l'une quelconque des revendications 1 à 4, caractérisé en ce que le bord de la coquille (7) est rendu solidaire de la partie inférieure du corps de piston (4) par soudure (37).

6. Piston selon l'une quelconque des revendications 1 à 4, caractérisé en ce que le bord de la coquille (7) est rendu solidaire de la partie inférieure du corps de piston (4) par constitution de la coquille (7) et du corps du piston (4) en une seule pièce.

7. Piston selon l'une quelconque des revendications 1 à 4, caractérisé en ce que le bord de la coquille (7) est rendu solidaire de la partie inférieure du corps de piston (4) par pincement d'une collerette (18) constituant le bord de la coquille (7), entre le corps de piston (4) et une bride (19) fixée rigidement au corps (4).

8. Piston selon l'une quelconque des revendications 1 à 7, en particulier piston pour moteur à quatre temps, caractérisé en ce qu'une bride (19), en particulier la bride de la revendication 7, pince à travers des moyens élastiques (33), une entretoise (32) venant s'appuyer sur la partie inférieure du pied de bielle (6).

9. Piston selon la revendication 4, caractérisé en ce que l'huile provenant du susdit espace (16) sert à refroidir le corps de piston (4).

10. Piston selon l'une quelconque des revendications 1 à 9, caractérisé en ce que, pour constituer l'interstice (13), le pied (6) de la bielle (3) a une forme aussi parfaitement sphérique que possible et en ce que la calotte (8) de la coquille (7) a une forme s'écartant légèrement au repos de la forme sphérique.

## Patentansprüche

1. Kolben bestimmt zum Hin- und Hergleiten in Zylindern von Kolbenkraftmschinen mit innerer oder äußerer Verbrennung und von Kompressoren, das heißt von Maschinen, in denen ein Arbeitsgas, das in dem oder in jedem Zylinder (2) durch eine Querfläche (14) des Kolbens (1) gehalten, sich gleichzeitig unter hohem Druck und hoher Temperatur befindet, vorzugsweise Kolben für Kolbenkraftmaschinen mit innerer Verbrennung im Zweitakt- oder Viertaktverfahren, welche im Innern eines außen zylindrischen Körpers (4) einen Innenhohlraum (5) aufweisen, in dem der teilweise sphärische Fuß (6) einer Kolbenstange (3) und eine dichte Kokille (7) gelagert sind, welche eine nahezu halbkugelförmige Kappe (8) hat, deren Rand ringförmig mit dem Innenteil des Körpers (4) des Kolbens (1) verbunden ist, wobei diese Kokille (7) so gestaltet ist, daß ihre nahezu halbkugelförmige Kappe (8), wenn der Kolben (1) sich in Ruhestellung befindet oder wenn der Druck im Laufe eines Verdichtung-Expansion-Zyklus auf dem teilweise sphärischen Fuß (6) der Kolbenstange (3) nur entlang einer geschlossenen kreisförmigen Kontakt-Linie (9) ruht oder eines solchen Kontakt-Streifens (10), der gelegen ist in, oder an seinem oberen Teil begrenzt ist von, einer Fläche (P), die über dem Mittelpunkt (C) des Kolbenstangenfußes (8) und vorzugsweise senkrecht zur Achse (X-X) des Kolbens (1) verläuft, wobei dieser Kolben (1) Einwegvorrichtungen enthält für die Zuleitung des Schmieröls unter Druck, welche oberstromig mittels eines Rückschlagventils (11) mit einer in der Kolbenstange (3) angelegten Ölleitung (12) kommunizieren und welche vorzugsweise in der Achse der Kolbenstange in einen Zwischenraum (13) münden, der begrenzt wird von den Teilen der Oberfläche des Kolbenstangenfußes (6) und der Kokille (7), die oberhalb besagter Kontakt-Linie (9) oder besagten Kontakt-Streifens (10) liegen, wobei der Druck des Schmieröls oberstromig von besagtem Rückschlagventil (11) zumindest während eines Teils des Verdichtung-Expansion-Zyklus des Arbeitsgases höher ist als der in besagtem Zwischenraum (13) herrschende Druck, da der zwischen dem Kolbenstangenfuß (6) und der Kokille (7) unter der besagten Kontakt-Linie oder dem besagten Kontakt-Streifen liegende Raum kommuniziert mit einer Auspuffzone relativ niederen Druckes, der niedriger ist als der Höchstdruck, der in besagtem Zwischenraum (13) herrscht,
**gekennzeichnet durch folgende Merkmale:**
- der Raum (16), der im Inneren des besagten Hohlraums (5) begrenzt ist durch die Oberflächen (17) der Kokille (7), die vom Kolbenstangentuß (6) entfernt ist, ist so angelegt, daß sich darin im Betrieb aufgrund der Verformung der Kokille (7) kein nennenswerter hydrostatischer Druck entwickeln kann;
- die Kokille (7) wird im Betrieb gespannt gehalten zwischen dem teilweise sphärischen Fuß (6) der Kolbenstange (3) und dem ringförmigen Bereich, durch den ihr Rand mit dem Unterteil des Körpers (4) des Kolbens (1) verbunden ist;
- die Kokille (7) ist gefertigt aus einem Metall oder einem anderen, gleichwertigen elastischen Material und hat eine ausreichend große Dicke, damit diese Kokille (7) in der Lage ist, die im Betrieb von dem Arbeitsgas auf besagte Querfläche (14) des Kolbens (1) ausgeübten und von der Kokille (7) mittels ihres ringförmigen Verbundbereichs empfangenen Kräfte auf den teilweise sphärischen Fuß (6) des Kolbens (3) zu übermitteln, wobei die Dicke dieser Kokille (7) jedoch hinreichend gering ist, damit sie sich unter der Wirkung der Spannung vorformen kann, welche aus den vom Druck des Arbeitsgases zyklisch auf die Querfläche (14) des Kolbens (1) ausgeübten und mittels der Kokille (7) auf die Kolbenstange übertragenen Kräften resultiert, und zwar so, daß sie das Volumen des Zwischenraums (13) zyklisch verkleinert und vorzugsweise die Fläche des Kontaktstreifens (10) zyklisch vergrößert, wobei die Minimal- und Maximal-Grenzwerte, welche die Dicke der Kokille (7) aufweisen muß, so sind, daß das Material, aus dem sie hergestellt ist, auf keinen Fall seine Beanspruchungsgrenzen überschreitet.

2. Kolben nach Anspruch 1, dadurch gekennzeichnet, daß der im Innern des besagten Hohlraums (5) begrenzte Raum (16) abgeschlossen und mit einem Gas gefüllt ist.

3. Kolben nach Anspruch 1, dadurch gekennzeichnet, daß der im Innern des besagten Hohlraums (5) begrenzte Raum (16) zumindest teilweise mit einem Schmieröl gefüllt und mit einer Auspuffzone relativ geringen Drucks verbunden ist.

4. Kolben nach Anspruch 3, dadurch gekennzeichnet, daß der Raum (16) mit einem Öl gespeist wird, das den Einwegvorrichtungen für die Zuleitung des Schmieröls (11, 12) oberstromig von ihrem Rückschlagventil (11) entnommen wird.

5. Kolben nach einem der Ansprüche 1 - 4, dadurch gekennzeichnet, daß der Rand der Kokille (7) mit dem Unterteil des Kolbenkörpers (4) durch Verschweißen (37) verbunden ist.

6. Kolben nach einem der Ansprüche 1-4, dadurch gekennzeichnet, daß der Rand der Kokille (7) mit dem Unterteil des Kolbenkörpers (4) verbunden ist durch Gestaltung der Kokille (7) und des Kolbenkörpers (4) in einem einzigen Stück.

7. Kolben nach einem der Ansprüche 1 - 4, dadurch gekennzeichnet, daß der Rand der Kokille (7) mit dem Unterteil des Kolbenkörpers (4) verbunden ist durch Quetschung eines Ringes (18), der den Rand der Kokille (7) bildet, zwischen dem Kolbenkörper (4) und einem starr am Körper (4) befestigten Bundring (19).

8. Kolben nach einem der Ansprüche 1 - 7, insbesondere Kolben für Viertrakt-Motor, dadurch gekennzeichnet, daß ein Bundring (19), insbesondere der Bundring des Anspruchs 7, durch elastische Mittel (33) gegen einen Steg (32) quetscht, der sich auf den Unterteil des Kolbenstangenfußes (6) legt.

9. Kolben nach Anspruch 4, dadurch gekennzeichnet, daß das aus dem besagten Raum (16) kommende Öl zur Kühlung des Kolbenkörpers (4) dient.

10. Kolben nach einem der Ansprüche 1 - 9, dadurch gekennzeichnet, daß zur Bildung des Zwischenraums (13) der Fuß (6) der Kolbenstange (3) eine möglichst perfekt sphärische Form hat und dadurch, daß die Kappe (8) der Kokille (7) eine Form hat, die in Ruhestellung leicht von der sphärischen Form abweicht.

## Claims

1. Piston for sliding in cylinders of reciprocating internal or external combustion engines and compressors, i.e. machines in which a working gas contained in the or each cylinder (3) by a transverse surface (14) of the piston (1) is at both high pressure and high temperature, preferably a piston for a two-stroke or four-stroke reciprocating internal combustion engine, said piston comprising inside an externally cylindrical body (4) an inner cavity (5) in which are disposed the partly spherical little-end (6) of a connecting rod (3) and a fluidtight shell (7) which comprises a substantially hemispherical dome (8) and has an edge portion which is annularly connected to the lower part of the body (4) of the piston (1), said shell (7) being so arranged that its substantially hemispherical dome (8) bears, when the piston (1) is at rest or when the pressure is minimum in the course of the compression-expansion cycle, on the partly spherical little-end (6) of the connecting rod (3) only along a closed circular contact line or band (9, 10) contained in, or limited in an upper part thereof, by a plane (P) which is located above the center (C) of the connecting rod little-end (6) and is preferably perpendicular to the axis (X-X) of the piston (1), said piston (1) comprising unidirectional means for supplying lubricating oil under pressure which communicate, on the upstream side, through a check valve (11), with an oil passage (12) provided in the connecting rod (3) and which open, preferably on the axis of the connecting rod, into an interstice (13) defined by the parts of the surface of the connecting rod little-end (6) and the surface of the shell (7) located above said contact line or band (9, 10), the pressure of the lubricating oil, on the usptream side of said check valve (11), being higher, at least during a part of the compression-expansion cycle of the working gas, than the pressure prevailing in said interstice (13), the space between the connecting rod little-end (6) and the shell (7) below their above-mentioned contact line or band (9, 10) communicating with a discharge zone at a relatively low pressure lower than the maximum pressure prevailing in said interstice (13) ;
characterised in that the space (16), which is limited inside said cavity (5) by that one (17) of the surfaces of the shell (7) which is remote from the connecting rod little-end (6), is so arranged that no appreciable hydrostatic pressure can develop therein in the course of operation as a result of the deformation of the shell (7) ; in that the shell (7) is maintained taut in operation between the partly spherical little-end (6) of the connecting rod (3) and the annular zone by which said edge portion of the shell is connected to the lower part of the body (4) of the piston (1) ; and in that the shell (7) is made from a metal or like resilient material, and has sufficient thickness to ensure that said shell (7) is capable of transmitting to the partly spherical little-end of the connecting rod (3) forces exerted in operation by the working gas on said transverse surface (14) of the piston (1) and received by the shell (7) through its annular connection zone, said shell (7) being however thin enough to be capable of resiliently deforming under the effect of the tension resulting from the forces due to the pressure of the working gas exerted cyclically on the transverse surface (14) of the piston (1) and transmitted to the connecting rod (3) through the shell (7), so as to cyclically reduce the volume of the interstice (13) and preferably cyclically increase the area of the contact band (10) ; the minimum and maximum limits imposed on the thickness of the shell (7) being such that the material of said shell under no circumstance exceeds its fatigue limit.

2. Piston according to claim 1, characterised in that the space (16) limited inside said cavity (5) is closed and filled with a gas.

3. Piston according to claim 1, characterised in that the space (16) limited inside said cavity (5) is at least partly filled with lubricating oil and is connected to a discharge zone at relatively low pressure.

4. Piston according to claim 3, characterised in that the space (16) is supplied with oil taken from said unidirectional means (11, 12) for supplying oil, on the upstream side of their check valve (11).

5. Piston according to any one of claims 1 to 4, characterised in that the edge portion of the shell (7) is connected to the lower part of the piston body (4) by welding (37).

6. Piston according to any one of claims 1 to 4, characterised in that the edge portion of the shell (7) is connected to the lower part of the piston body (4) by the fact that the shell (7) and the piston body (4) are made in one piece.

7. Piston according to any one of claims 1 to 4, characterised in that the edge portion of the shell (7) is connected to the lower part of the piston body (4) by pinching a flange (18) constituting the edge portion of the shell (7), between the piston body (4) and a ring (19) which is rigidly secured to the body (4).

8. Piston according to any one of claims 1 to 7, in particular piston for four-stroke engine, characterised in that a ring (19), in particular the ring according to claim 7, pinches through resiliently yiealdable means (33) a brace (32) which is in bearing relation to a lower part of the connecting rod little-end (6).

9. Piston according to claim 4, characterised in that the oil coming from said space (16) serves to cool the piston body (4).

10. Piston according to any one of claims 1 to 9, characterised in that, for constituting the interstice (13), the little-end (6) of the connecting rod (3) has a shape which is a perfectly spherical as possible and in that the dome (8) of the shell (7) has a shape which slightly differs at rest from the spherical shape.
